# EUROPÄISCHE PATENTANMELDUNG

(11) **EP 2 546 115 A2**
(43) Veröffentlichungstag der Anmeldung: **16.01.2013**
(21) Anmeldenummer: 12175449.3
(22) Anmeldetag: 06.07.2012
(51) Int. Cl.: B60S 1/38, B60S 1/40

(54) **Wischblattadaptervorrichtung**

(30) Priorität: 14.07.2011 DE 102011079131
(71) Anmelder: ROBERT BOSCH GMBH, 70442 Stuttgart (DE)
(72) Erfinder: Heller, Joachim, 77815 Buehl (DE)

(57) **Zusammenfassung**

Die Erfindung geht aus von einer Wischblattadaptervorrichtung mit zumindest einem Wischblattadapter (12), der zumindest einen Aufnahmebereich (14) aufweist, der dazu vorgesehen ist, zumindest einen Wischarmadapter (16) eines Wischarms (18) aufzunehmen.

Es wird vorgeschlagen, dass die Wischblattadaptervorrichtung zumindest einen Wischblattadapterdeckel (20), der dazu vorgesehen ist, den Wischarmadapter (16) des Wischarms (18) in dem Aufnahmebereich (14) zu halten, und zumindest ein Führungseinheit (22) aufweist, über die der Wischblattadapterdeckel (20) auf dem Wischblattadapter (12) entlang zumindest einer Bahn geführt ist.

## Beschreibung

### Stand der Technik

Es ist bereits eine Wischblattadaptervorrichtung mit zumindest einem Wischblattadapter, der zumindest einen Aufnahmebereich aufweist, der dazu vorgesehen ist, zumindest einen Wischarmadapter eines Wischarms aufzunehmen, vorgeschlagen worden.

### Offenbarung der Erfindung

Die Erfindung geht aus von einer Wischblattadaptervorrichtung mit zumindest einem Wischblattadapter, der zumindest einen Aufnahmebereich aufweist, der dazu vorgesehen ist, zumindest einen Wischarmadapter eines Wischarms aufzunehmen.

Es wird vorgeschlagen, dass die Wischblattadaptervorrichtung zumindest einen Wischblattadapterdeckel, der dazu vorgesehen ist, den Wischarmadapter des Wischarms in dem Aufnahmebereich zu halten, und zumindest eine Führungseinheit aufweist, über die der Wischblattadapterdeckel auf dem Wischblattadapter entlang zumindest einer Bahn geführt ist. Unter einem "Wischblattadapter" soll in diesem Zusammenhang insbesondere ein Adapter verstanden werden, der einen Kontaktbereich zu einem Wischblattbauteil aufweist und mit dem Wischblattbauteil unverlierbar verbunden und dazu vorgesehen ist, einen Kopplungsbereich des Wischblattbauteils für eine Kopplung und/oder Kontaktierung mit einem Wischarmadapter bereitzustellen. Der Wischblattadapter ist für verschiedene, dem Fachmann als sinnvoll erscheinende Wischblätter anwendbar, insbesondere jedoch für Frontwischblätter mit einer mittigen Befestigung, für Frontwischblätter mit einer Befestigung an einem Innenkreis des Wischblatts und/oder für Heckwischblätter. Ferner soll unter einem "Aufnahmebereich" in diesem Zusammenhang insbesondere ein Raum verstanden werden, der dazu vorgesehen ist, zumindest ein Element und/oder eine Einheit aufzunehmen. Unter einem "Wischarmadapter" soll in diesem Zusammenhang insbesondere ein Adapter verstanden werden, der einen Kontaktbereich zu einem Wischarmbauteil aufweist und mit dem Wischarmbauteil unverlierbar verbunden und dazu vorgesehen ist, einen Kopplungsbereich des Wischarmbauteils für eine Kopplung und/oder Kontaktierung mit einem Wischblattadapter bereitzustellen. Der Kopplungsbereich kann auf verschiedene, dem Fachmann als sinnvoll erscheinende Arten realisiert werden, insbesondere kann der Kopplungsbereich jedoch durch eine gebogene Stange, durch ein vorteilhaft geformtes Verbindungselement, durch einen Stift, insbesondere einen Metallstift, und/oder besonders vorteilhaft durch einen eine Ausnehmung begrenzenden Rand realisiert werden. Unter einem "Wischarm" soll insbesondere eine Einheit verstanden werden, die dazu vorgesehen ist, eine zumindest teilweise formsteife Verbindung zwischen einem Wischmotor und einem Wischblatt zu schaffen, wobei der Wischarm unverlierbar mit dem Wischmotor verbunden ist. Unter einem "Wischblattadapterdeckel" soll in diesem Zusammenhang insbesondere ein Element verstanden werden, das in einem montierten Zustand den Wischblattadapter zumindest teilweise überdeckt. Des Weiteren soll unter einer "Führungseinheit" insbesondere eine Einheit verstanden werden, die zumindest ein Element gegenüber einem anderen Element auf einer vorgegebenen Relativbewegungsbahn führt. Vorzugsweise weist die Führungseinheit zumindest eine Führungsausformung, und zwar eine Führungsausnehmung und/oder einen Führungsvorsprung, auf, welche die vorgegebene Relativbewegungsbahn definiert. Unter einer Bewegung "entlang zumindest einer Bahn" soll in diesem Zusammenhang insbesondere entlang zumindest einer vorgegebenen Bahn verstanden werden, und zwar insbesondere eine Bewegung, die sich von einer reinen Rotation um eine Rotationsachse, die durch den Wischblattadapter und/oder den Wischblattadapterdeckel verläuft, unterscheidet. Die Bewegungsbahn kann insbesondere entlang einer Geraden, entlang einer einfach oder mehrfach gekrümmten Linie, entlang eines Teilkreises oder entlang einer Anreihung aus Geraden, gekrümmten Linien und/oder Teilkreisen verlaufen, wobei bei Teilkreisen die Rotationsachse immateriell außerhalb des Wischblattadapters und außerhalb des Wischblattadapterdeckels liegt. Ferner soll darunter insbesondere verstanden werden, dass alle Punkte des Wischblattadapterdeckels auf dem Wischblattadapterdeckel entlang zumindest einer vorgegebenen Bewegungsbahn geführt sind.

Durch die erfindungsgemäße Ausgestaltung der Wischblattadaptervorrichtung kann vorteilhaft eine zuverlässige und einfach herzustellende Verbindung zwischen dem Wischblatt und dem Wischarm zur Verfügung gestellt werden. Ferner kann dadurch vorteilhaft eine geringe Anzahl Bauteile erreicht werden.

Vorteilhaft weist der Aufnahmebereich des Wischblattadapters zumindest ein Aufnahmeelement auf, das dazu vorgesehen ist, einen eingesetzten Wischarmadapter in zumindest eine Richtung zu sichern. Dadurch kann ein eingesetzter Wischarmadapter bereits vorteilhaft teilweise und vorläufig gesichert werden.

Des Weiteren wird vorgeschlagen, dass die Führungseinheit dazu vorgesehen ist, den Wischblattadapterdeckel zumindest teilweise translatorisch auf dem Wischblattadapter zu führen. Unter "zumindest teilweise translatorisch" soll in diesem Zusammenhang insbesondere verstanden werden, dass zumindest ein Punkt des Wischblattadapterdeckels entlang einer Geraden auf dem Wischblattadapterdeckel geführt ist. Dadurch kann ein vorteilhaft einfacher Montagevorgang erreicht werden.

Ferner wird vorgeschlagen, dass die Führungseinheit dazu vorgesehen ist, den Wischblattadapterdeckel zumindest annähernd in einer Längserstreckung des Wischblattadapters auf dem Wischblattadapter zu führen. Unter "zumindest annähernd" soll in diesem Zusammenhang insbesondere verstanden werden, dass eine Abweichung von einer vorgegebenen Erstreckung insbesondere weniger als 15°, vorzugsweise weniger als 10° und besonders bevorzugt weniger als 5° der vorgegebenen Erstreckung beträgt. Unter einer "Längserstreckung des Wischblattadapters" soll in diesem Zusammenhang insbesondere eine Erstreckung verstanden werden, die zumindest einer Hauptausdehnungsrichtung des Wischblattadapters entspricht. Vorzugsweise entspricht die Längserstreckung des Wischblattadapters einer Ausrichtung eines Wischblatts an dem Wischblattadapter in einem mit dem Wischblattadapter verbunden Zustand. Dadurch kann ein besonders einfacher Montagevorgang und ein geringer Montageaufwand realisiert werden. Ferner kann eine besonders geringe Bau- und Montagehöhe erreicht werden.

Zudem wird vorgeschlagen, dass der Wischblattadapterdeckel lösbar vom Wischblattadapter ausgeführt ist. Unter "lösbar" soll in diesem Zusammenhang insbesondere zerstörungsfrei trennbar verstanden werden, besonders vorteilhaft soll darunter insbesondere werkzeuglos trennbar verstanden werden. Dadurch können eine einfache Produktion, ein einfacher Transport und eine einfache Montage erreicht werden. Ferner können dadurch besonders einfach der Wischblattadapter und der Wischblattadapterdeckel aus verschiedenen Materialien realisiert werden. Des Weiteren können dadurch insbesondere geringe Kosten erreicht werden.

Es wäre zudem denkbar, dass der Wischblattadapterdeckel zumindest ein Sicherungselement aufweist, das bei einem Lösen betätigt werden muss, um eine ungewolltes Lösen zu verhindern. Dadurch könnte ein Verlieren des Wischblattadapters zuverlässig vermieden werden.

Ferner wäre es jedoch auch denkbar, dass der Wischblattadapterdeckel fest mit dem Wischblattadapter verbunden ist und lediglich begrenzt gegenüber dem Wischblattadapter verschiebbar ausgeführt ist. Dies könnte beispielsweise durch einen Anschlag an der Führungseinheit realisiert werden. Dadurch kann ein Verlieren des Wischblattadapterdeckels verhindert werden. Zudem kann eine Befestigung des Wischblattadapters an einem Wischarm erleichtert werden.

Des Weiteren wird vorgeschlagen, dass die Führungseinheit an dem Wischblattadapter zumindest eine Führungsausnehmung aufweist, die von einer Führungsnut gebildet ist. Unter einer "Führungsausnehmung" soll in diesem Zusammenhang insbesondere eine Ausnehmung und/oder eine Vertiefung verstanden werden, die dazu vorgesehen ist, zumindest ein Element, insbesondere ein Führungselement, entlang einer Hauptausdehnung der Ausnehmung zu führen. Vorzugsweise verläuft die Führungsausnehmung entlang einer Geraden, welche zudem die Führungsrichtung definiert. Dadurch kann vorteilhaft eine zuverlässige Führungseinheit zur Verfügung gestellt werden. Ferner kann eine maximale Ausdehnung des Wischblattadapters trotz der Führungseinheit beibehalten werden.

Ferner wird vorgeschlagen, dass die Führungseinheit an dem Wischblattadapterdeckel zumindest ein Führungselement aufweist, das von einer stegförmigen Führungsschiene gebildet ist. Unter einem "Führungselement" soll in diesem Zusammenhang insbesondere ein Element verstanden werden, das dazu vorgesehen ist, in zumindest eine Führungsausnehmung einzugreifen und zumindest ein Element und/oder ein Bauteil in der Führungsausnehmung zu führen. Dadurch kann zuverlässig und kostengünstig eine Führungseinheit zur Verfügung gestellt werden.

Zudem wird vorgeschlagen, dass der Wischblattadapter und der Wischblattadapterdeckel jeweils zumindest ein Rastmittel aufweisen, die in einem verrasteten Zustand dazu vorgesehen sind, eine Relativbewegung zwischen dem Wischblattadapter und dem Wischblattadapterdeckel zu unterbinden. Unter einem "Rastmittel" soll in diesem Zusammenhang insbesondere ein Mittel verstanden werden, das dazu vorgesehen ist, bei einer Montage zur Herstellung einer Rastverbindung gegen eine Federkraft ausgelenkt zu werden, wobei das Rastmittel vorzugsweise durch die Federkraft am Ende der Montage zumindest teilweise in Richtung seiner Ausgangsstellung zurückgestellt wird. Die Federkraft kann dabei von einem separaten Federelement gebildet sein. Zusätzlich oder vorzugsweise alternativ ist jedoch das Rastmittel selbst zur elastischen Auslenkung und zur Bereitstellung der Federkraft vorgesehen.

Das Rastmittel kann sowohl von einem Rastelement, als auch von einer Rastausnehmung gebildet sein. Dadurch kann der Wischblattadapterdeckel vorteilhaft in einer bestimmten Position zu dem Wischblattadapter fixiert werden. Ferner kann dadurch ein Verlieren des Wischblattadapterdeckels vermieden werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Wischblattadaptervorrichtung mit einem ausschnittsweise dargestellten Wischblatt und einem ausschnittsweise dargestellten Wischarm bei einer Montage in einer schematischen Darstellung,
- Fig. 2: die erfindungsgemäße Wischblattadaptervorrichtung mit dem Wischblatt und dem Wischarm in einem montierten Zustand und einer schematischen Darstellung,
- Fig. 3: einen Wischblattadapterdeckel der erfindungsgemäßen Wischblattadaptervorrichtung in einer schematischen Darstellung,
- Fig. 4: einen Wischblattadapter der erfindungsgemäßen Wischblattadaptervorrichtung in einer schematischen Darstellung und
- Fig. 5: den Wischblattadapter der erfindungsgemäßen Wischblattadaptervorrichtung auf einem Wischblatt in einer schematischen Darstellung.

### Beschreibung des Ausführungsbeispiels

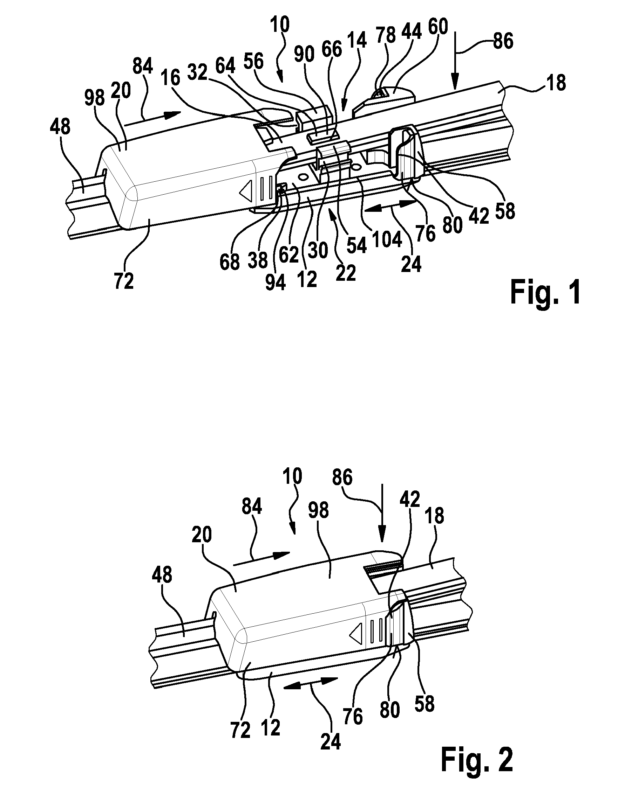

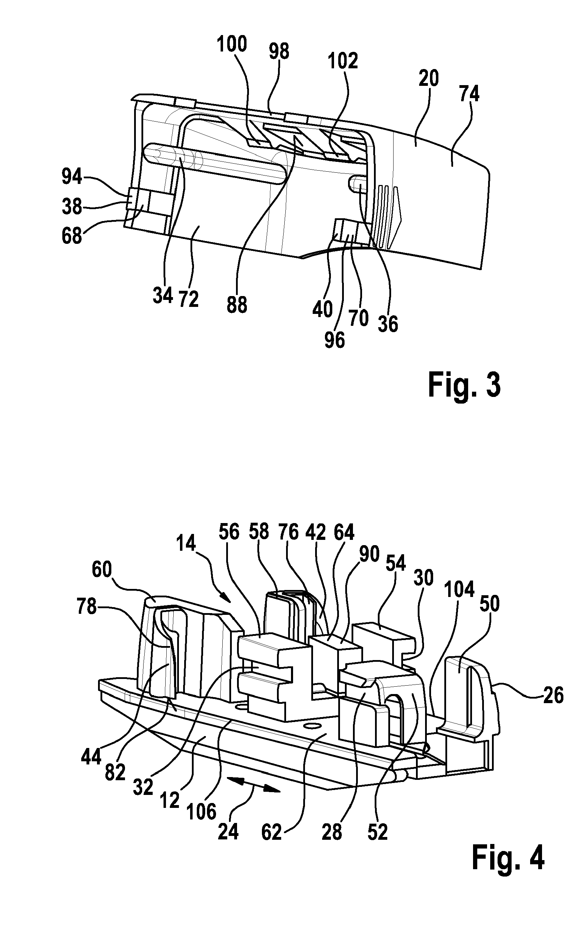

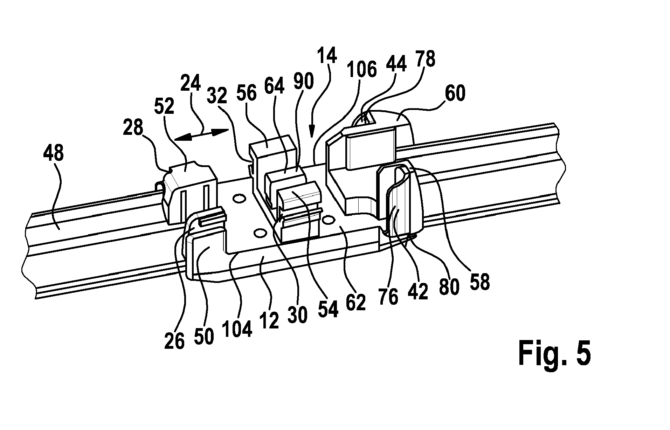

Figur 1 zeigt eine Wischblattadaptervorrichtung 10 mit einem ausschnittsweise dargestellten Wischblatt 48 und einem ausschnittsweise dargestellten Wischarm 18. Die Wischblattadaptervorrichtung 10 weist einen Wischblattadapter 12 auf, der einen Aufnahmebereich 14 aufweist, der dazu vorgesehen ist, zumindest einen Wischarmadapter 16 des Wischarms 18 aufzunehmen. Der Wischblattadapter 12 ist unverlierbar mit dem Wischblatt 48 verbunden (Figur 5). Der Wischblattadapter 12 weist dazu an seiner Unterseite einen Kontaktbereich auf, der mit seiner Kontur einer Kontur eines Kontaktbereichs der Wischblattoberseite entspricht. Ferner weist der Wischblattadapter 12 eine Längserstreckung 24 auf, die teilweise einer Längserstreckung des Wischblatts 48 entspricht. Der Aufnahmebereich 14 ist in dem Wischblattadapter 12 angeordnet und von sechs Fortsätzen 50, 52, 54, 56, 58, 60 des Wischblattadapters 12 teilweise umgeben. Die sechs Fortsätze 50, 52, 54, 56, 58, 60 erstecken sich orthogonal zu einer Grundfläche 62 des Wischblattadapters 12 (Figuren 1, 4 und 5). Ferner sind die Fortsätze 50, 52, 54, 56, 58, 60 in zwei Reihen aus jeweils drei der Fortsätze 50, 52, 54, 56, 58, 60 entlang der Längserstreckung 24 des Wischblattadapters 12 an zwei parallel gegenüberliegenden Außenkanten 104, 106 der Grundfläche 62 des Wischblattadapters 12 angeordnet (Figur 4). Der Aufnahmebereich 14 weist ein Aufnahmeelement 64 auf, das dazu vorgesehen ist, den eingesetzten Wischarmadapter 16 in zwei Richtungen zu sichern. Das Aufnahmeelement 64 ist von einem rechteckigen Fortsatz gebildet. Ferner steht das Aufnahmeelement 64 orthogonal zu der Grundfläche 62 des Wischblattadapters 12 ab. Das Aufnahmeelement 64 ist zwischen zwei der sechs Fortsätze 54, 56 angeordnet, so dass zur Längserstreckung 24 orthogonale Ebenen existieren, die durch das Aufnahmeelement 64 und die Fortsätze 54, 56 verlaufen. Das Aufnahmeelement 64 und die sechs Fortsätze 50, 52, 54, 56, 58, 60 des Wischblattadapters 12 erstrecken sich bis zu einer gemeinsamen Ebene, welche eine Gesamthöhe des Wischblattadapters 12 darstellt (Figur 4). Der Wischarmadapter 16 ist unverlierbar und einstückig mit dem Wischarm 18 ausgebildet und weist eine rechteckige Ausnehmung 66 auf. Die Ausnehmung 66 weist eine Querschnittsform auf, die annähernd einer Querschnittsform des Aufnahmeelements 64 entspricht. Der Wischarmadapter 16 ist mit der rechteckigen Ausnehmung 66 orthogonal zu der Grundfläche 62 auf das Aufnahmeelement 64 geschoben, so dass der Wischarm 18 eine Hauptausdehnungsrichtung aufweist, die annähernd einer Hauptausdehnungsrichtung des Wischblatts 48 entspricht. Der Wischarmadapter 16 und der Wischarm 18 werden durch das Aufschieben gegen eine Bewegung in einer Bewegungsebene parallel zu einer Ebene der Grundfläche 62 gesichert. Der Wischarm 18 ist auf einem dem Wischarmadapter 16 abgewandten Ende unverlierbar mit einem nicht weiter sichtbaren Wischmotor verbunden.

Des Weiteren weist die Wischblattadaptervorrichtung 10 einen Wischblattadapterdeckel 20 auf, der dazu vorgesehen ist, den Wischarmadapter 16 des Wischarms 18 in dem Aufnahmebereich 14 zu halten, und ein Führungseinheit 22 auf, über die der Wischblattadapterdeckel 20 auf dem Wischblattadapter 12 entlang einer Bahn geführt ist. In der in Figur 1 dargestellten Stellung des Wischblattadapterdeckels 20 ist der Wischarmadapter 16 von dem Wischblattadapter 12 lösbar. Der Wischarmadapter 16 kann orthogonal zu der Grundfläche 62 des Wischblattadapters 12 in eine von der Grundfläche 62 des Wischblattadapters 12 abweisende Richtung von dem Aufnahmeelement 64 des Aufnahmebereichs 14 des Wischblattadapters 12 abgenommen werden. Die in Figur 1 dargestellte Stellung des Wischblattadapterdeckels 20 dient zu einem Einsetzen des Wischarmadapters 16 in den Aufnahmebereich 14. Der Wischblattadapterdeckel 20 weist eine rechteckige Grundform mit zwei geöffneten Seiten auf, wobei eine Grundseite mit einer größten Ausdehnung und eine Stirnseite mit einer kleinsten Ausdehnung geöffnet sind (Figur 3). Die Führungseinheit 22 der Wischblattadaptervorrichtung 10 ist dazu vorgesehen, den Wischblattadapterdeckel 20 translatorisch in der Längserstreckung 24 des Wischblattadapters 12 auf dem Wischblattadapter 12 zu führen. Die Führungseinheit 22 weist dazu an dem Wischblattadapter 12 vier Führungsausnehmungen 26, 28, 30, 32 aufweist, die von vier Führungsnuten gebildet sind. Ferner weist die Führungseinheit 22 dazu an dem Wischblattadapterdeckel 20 zwei Führungselemente 34, 36 auf, die von zwei stegförmigen Führungsschienen gebildet sind. Die Führungsausnehmungen 26, 28, 30, 32 sind an vier der Fortsätze 50, 52, 54, 56 des Wischblattadapters 12 angeordnet, die jeweils in den zwei Reihen direkt nebeneinander angeordnet sind (Figur 4). Ferner erstrecken sich die Führungsausnehmungen 26, 28, 30, 32 parallel zu der Längserstreckung 24 des Wischblattadapters 12, wobei jeweils zwei der Führungsausnehmungen 26, 30; 28, 32 in einer Verlängerung zueinander angeordnet sind. Die Führungsausnehmungen 26, 28, 30, 32 sind auf dem Aufnahmebereich 14 abgewandten Seiten von vier der Fortsätze 50, 52, 54, 56 des Wischblattadapters 12 angeordnet. Die Führungselemente 34, 36 (in Figur 1 nicht sichtbar) greifen, in der in Figur 1 dargestellten Montagestellung, in zwei der Führungsausnehmungen 26, 28 ein. Damit ist der Wischblattadapterdeckel 20 teilweise auf den Wischblattadapter 12 aufgeschoben. Die Führungselemente 34, 36 sind stegförmig ausgebildet und weisen jeweils in Richtung des Aufnahmebereichs 14 eine abgerundete Kontur auf (Figur 3). Die Führungselemente 34, 36 sind an zwei gegenüberliegenden Innenseiten 92 von Seitenwänden 72, 74 des Wischblattadapterdeckels 20 parallel zu einer Längsausdehnung des Wischblattadapterdeckels 20 angeordnet (Figur 3). Die Führungselemente 34, 36 erstecken sich über eine gesamte Längsausdehnung der Innenseiten 92. Die Führungselemente 34, 36 sind dazu vorgesehen, in die Führungsausnehmungen 26, 28, 30, 32 des Wischblattadapters 12 einzugreifen (Figur 3).

Ferner ist der Wischblattadapterdeckel 20 lösbar vom Wischblattadapter 12 ausgeführt. Wird der Wischblattadapterdeckel 20 entgegen der zwei Führungsausnehmungen 30, 32, mit welchen die Führungselemente 34, 36 noch außer Eingriff stehen, geschoben, kommen die Führungselemente 34, 36 außer Eingriff mit den ersten Führungsausnehmungen 26, 28. Damit ist der Wischblattadapterdeckel 20 von dem Wischblattadapter 12 gelöst und ist von diesem abnehmbar, so dass eine Verbindung zwischen dem Wischblattadapterdeckel 20 und dem Wischblattadapter 12 vollständig aufgehoben ist.

Des Weiteren weisen der Wischblattadapter 12 und der Wischblattadapterdeckel 20 jeweils zwei Rastmittel 38, 40, 42, 44 auf, die in einem verrasteten Zustand dazu vorgesehen sind, eine Relativbewegung zwischen dem Wischblattadapter 12 und dem Wischblattadapterdeckel 20 zu unterbinden. Die zwei Rastmittel 38, 40 des Wischblattadapterdeckels 20 sind von zwei Rastelementen 68, 70 gebildet. Die Rastelemente 68, 70 erstecken sich jeweils in Verlängerung zu den gegenüberliegenden Seitenwänden 72, 74 des Wischblattadapterdeckels 20. Die zwei Rastelemente 68, 70 des Wischblattadapterdeckels 20 sind an den gegenüberliegenden Innenseiten 92 der Seitenwände 72, 74 des Wischblattadapterdeckels 20 angeordnet (Figur 3). Die Rastelemente 68, 70 sind an einem der geöffneten Stirnseite des Wischblattadapterdeckels 20 zugewandten Ende der Innenseiten 92 angeordnet. Ferner sind die Rastelemente 68, 70 zwischen den Führungselementen 34, 36 und der geöffneten Grundseite angeordnet (Figur 3). Die Rastelemente 68, 70 sind parallel zu den Führungselementen 34, 36 ausgerichtet. Die Rastelemente 68, 70 ragen teilweise über die rechteckige Grundform des Wischblattadapterdeckels 20 auf der geöffneten Stirnseite hinaus (Figur 3). Die über die Grundform hinausragenden Enden der Rastelemente 68, 70 bilden federelastische Teilbereiche und weist jeweils eine Rastnase 94, 96 auf (Figur 3).

Die zwei Rastmittel 42, 44 des Wischblattadapters 12 sind jeweils von einem eine Rastausnehmung begrenzenden Rastelement 76, 78 gebildet (Figur 4). Die zwei Rastelemente 76, 78 sind an zwei der Fortsätze 58, 60 des Wischblattadapters 12 angeordnet. Die Rastelemente 76, 78 weisen Haupterstreckungen auf, die orthogonal zu der Grundfläche 62 des Wischblattadapters 12 und parallel zu den Haupterstreckungen der Fortsätze 58, 60 ausgerichtet sind. Die Rastausnehmungen weisen Haupterstreckungen auf, die parallel zu den Haupterstreckungen der Rastelemente 76, 78 verlaufen. Die Rastelemente 76, 78 weisen jeweils an den von den jeweiligen Rastelementen 76, 78 begrenzten Rastausnehmungen zugewandten Seiten eine nicht weiter sichtbare Rastnase auf. Die Rastnasen erstrecken sich entlang einer gesamten Haupterstreckung der Rastelemente 76, 78. Ferner sind die Rastnasen an den Fortsätzen 58, 60 abgewandten Enden der Rastelemente 76, 78 angeordnet. Das erste Rastelement 76 und die davon begrenzte Rastausnehmung ist aus einer Richtung der Längserstreckung 24 des Wischblattadapters 12 betrachtet mit seiner Grundseite 80 neben der Grundfläche 62 des Wischblattadapters 12 angeordnet. Das zweite Rastelement 78 und die davon begrenzte Rastausnehmung ist aus einer Richtung der Längserstreckung 24 des Wischblattadapters 12 betrachtet mit seiner Grundseite 82 auf der Grundfläche 62 des Wischblattadapters 12 angeordnet (Figuren 1, 4, und 5).

Der Wischblattadapterdeckel 20 weist an seiner Innenseite 88 an einer der geöffneten Grundseite gegenüberliegenden Deckwand 98 zwei Andrückelemente 100, 102 auf (Figur 3). Die Andrückelemente 100, 102 sind von zwei dachförmigen nach innen herausragenden Fortsätzen gebildet, die dazu vorgesehen sind, den Wischarmadapter 16 des Wischarms 18 in einem montierten Zustand auf das Aufnahmeelement 64 des Aufnahmebereichs 14 des Wischblattadapters 12 zu drücken.

Bei einer Montage wird der Wischarmadapter 16 des Wischarms 18, wie bereits beschrieben, senkrecht zu der Grundfläche 62 des Wischblattadapters 12 auf das Aufnahmeelement 64 des Aufnahmebereichs 14 des Wischblattadapters 12 geschoben, bevor der Wischblattadapterdeckel 20 vollständig auf den Wischblattadapter 12 aufgeschoben ist (Figur 1). In einem zweiten Schritt wird der Wischblattadapterdeckel 20 über die Führungseinheit 22 entlang der Längserstreckung 24 des Wischblattadapters 12, in einer Richtung von dem Wischblattadapter 12 hin zu dem Wischarm 18, vollständig auf den Wischblattadapter 12 geschoben. Dabei werden die Rastelemente 68, 70 des Wischblattadapterdeckels 20 in die Rastausnehmungen des Wischblattadapters 12 geschoben. Die Rastelemente 68, 70 werden durch die die Rastausnehmungen begrenzenden Rastelemente 76, 78 federelastisch ausgelenkt, bis die Rastnasen 94, 96 der Rastelemente 68, 70 des Wischblattadapterdeckels 20 hinter die nicht weiter sichtbaren Rastnasen der Rastelemente 76, 78 rasten (Figur 2). Der Wischblattadapterdeckel 20 ist damit durch eine Federkraft der Rastelemente 68, 70 gegen ein Zurückrutschen gesichert. Die Richtung von dem Wischblattadapter 12 hin zu dem Wischarm 18 in Längserstreckung 24 des Wischblattadapters 12 definiert eine Montagerichtung 84 des Wischblattadapterdeckels 20. Ferner definiert eine Richtung senkrecht zu der Grundfläche 62 des Wischblattadapters 12 eine Montagerichtung 86 des Wischarmadapters 16 und des Wischarms 18. Die Montagerichtung 84 des Wischblattadapterdeckels 20 verläuft orthogonal zu der Montagerichtung 86 des Wischarmadapters 16 und des Wischarms 18. Der Wischblattadapterdeckel 20 überdeckt in dem montierten Zustand den Wischblattadapter 12. In dem montierten Zustand liegt die Innenseite 88 des Wischblattadapterdeckels 20 an einer Stirnseite 90 des Aufnahmeelements 64 an. Der Wischarmadapter 16 ist dadurch gegen eine Bewegung entgegen seiner orthogonal zur Längserstreckung 24 verlaufenden Montagerichtung 86 blockiert. Die Andrückelemente 100, 102 drücken den Wischarmadapter 16 neben dem Aufnahmeelement 64 weiter nach unten, um ein Verklemmen des Wischarmadapters 16 auf dem Aufnahmeelement 64 zu erzeugen. Der Wischarmadapter 16 ist damit form- und kraftschlüssig in dem Wischblattadapter 12 gehalten. Ferner wirkt eine von dem Wischarmadapter 16 ausgehende und auf den Wischblattadapterdeckel 20 wirkende Kraft entgegen der orthogonal zur Längserstreckung 24 verlaufenden Montagerichtung 86 des Wischarmadapters 16. Der Wischblattadapterdeckel 20 ist in diese Richtung durch die Führungseinheit 22 gesichert. Eine für ein Lösen der Rastelemente 68, 70 benötigte Kraft wirkt entgegen der parallel zur Längserstreckung 24 verlaufenden Montagerichtung 84 des Wischblattadapterdeckels 20. Folglich steht die für das Lösen des Wischblattadapterdeckels 20 benötigte Kraft orthogonal zu der durch den Wischarmadapter 16 auf den Wischblattadapterdeckel 20 wirkenden Kraft. Dadurch kann vorteilhaft ein ungewolltes Lösen des Wischblattadapterdeckels 20 von dem Wischblattadapter 12 vermieden werden.

Bei einer Demontage werden die Seitenwände 72, 74 des Wischblattadapterdeckels 20 zusammengedrückt. Dadurch kommen die Rastelemente 68, 70 des Wischblattadapterdeckels 20 außer Eingriff mit den Rastelementen 76, 78 des Wischblattadapters 12. Anschließend wird in einem zweiten Schritt der Wischblattadapterdeckel 20 entgegen seiner Montagerichtung 84 von dem Wischblattadapter 12 geschoben. In einem dritten Schritt wird der Wischarmadapter 16 mit dem Wischarm 18 entgegen seiner Montagerichtung 86 von dem Aufnahmeelement 64 des Aufnahmebereichs 14 des Wischblattadapters 12 geschoben. Der Wischarmadapter 16 ist dadurch von dem Wischblattadapter 12 getrennt.

## Patentansprüche

1. Wischblattadaptervorrichtung mit zumindest einem Wischblattadapter (12), der zumindest einen Aufnahmebereich (14) aufweist, der dazu vorgesehen ist, zumindest einen Wischarmadapter (16) eines Wischarms (18) aufzunehmen, **gekennzeichnet durch** zumindest einen Wischblattadapterdeckel (20), der dazu vorgesehen ist, den Wischarmadapter (16) des Wischarms (18) in dem Aufnahmebereich (14) zu halten, und **durch** zumindest eine Führungseinheit (22), über die der Wischblattadapterdeckel (20) auf dem Wischblattadapter (12) entlang zumindest einer Bahn geführt ist.

2. Wischblattadaptervorrichtung nach Anspruch 1, **dadurch gekennzeichnet, dass** die Führungseinheit (22) dazu vorgesehen ist, den Wischblattadapterdeckel (20) zumindest teilweise translatorisch auf dem Wischblattadapter (12) zu führen.

3. Wischblattadaptervorrichtung nach Anspruch 1 oder 2, **dadurch gekennzeichnet, dass** die Führungseinheit (22) dazu vorgesehen ist, den Wischblattadapterdeckel (20) zumindest annähernd in einer Längserstreckung (24) des Wischblattadapters (12) auf dem Wischblattadapter (12) zu führen.

4. Wischblattadaptervorrichtung nach einem der vorhergehenden Ansprüche, **dadurch gekennzeichnet, dass** der Wischblattadapterdeckel (20) lösbar vom Wischblattadapter (12) ausgeführt ist.

5. Wischblattadaptervorrichtung nach einem der vorhergehenden Ansprüche, **dadurch gekennzeichnet, dass** die Führungseinheit (22) an dem Wischblattadapter (12) zumindest eine Führungsausnehmung (26, 28, 30, 32) aufweist, die von einer Führungsnut gebildet ist.

6. Wischblattadaptervorrichtung zumindest nach Anspruch 5, **dadurch gekennzeichnet, dass** die Führungseinheit (22) an dem Wischblattadapterdeckel (20) zumindest ein Führungselement (34, 36) aufweist, das von einer stegförmigen Führungsschiene gebildet ist.

7. Wischblattadaptervorrichtung nach einem der vorhergehenden Ansprüche, **dadurch gekennzeichnet, dass** der Wischblattadapter (12) und der Wischblattadapterdeckel (20) jeweils zumindest ein Rastmittel (38, 40, 42, 44) aufweisen, die in einem verrasteten Zustand dazu vorgesehen sind, eine Relativbewegung zwischen dem Wischblattadapter (12) und dem Wischblattadapterdeckel (20) zu unterbinden.

8. Wischblattadapterdeckel für eine Wischblattadaptervorrichtung (10) nach einem der vorhergehenden Ansprüche.

9. Wischblattadapter für eine Wischblattadaptervorrichtung (10) nach einem der Ansprüche 1 bis 7.

10. Wischblattvorrichtung mit einem Wischblatt (48) und mit einer Wischblattadaptervorrichtung (10) nach einem der Ansprüche 1 bis 7.
